# EUROPEAN PATENT APPLICATION

(11) **EP 2 190 053 A1**
(43) Date of publication of application: **26.05.2010**
(21) Application number: 08846773.3
(22) Date of filing: 02.10.2008
(51) Int. Cl.: H01M 8/04, B65D 83/00

(54) **FUEL SUPPLY SYSTEM**

(30) Priority: 09.11.2007 JP 2007291493
(71) Applicant: Panasonic Corporation, Osaka 571-8501 (JP)
(72) Inventor: KOZU, Katsumi, 7F OBP Panasonic Tower, 1-61, Shiromi 2-chome, Chuo-ku, Osaka-shi, Osaka 540-6207 (JP)
(74) Representative: Schwabe - Sandmair - Marx
(86) International application number: PCT/JP2008/002763
(87) International publication number: WO 2009/060558

(57) **Abstract**

A fuel supply system includes a holder, a first connector, a second connector, and a connecting pipe. The holder has a device holder part on which an electronic device is to be mounted. The first connector is provided at the device holder part. The second connector is connected to a fuel cartridge. The connecting pipe connects the first connector with the second connector. A predetermined portion of the device holder part other than the first connector and a predetermined part of the electronic device form a pair of mechanical keys having special shapes capable of being coupled to each other.

## Description

### TECHNICAL FIELD

The present invention relates to a fuel supply system for connecting a device including a power generation section having a fuel cell and a fuel cartridge with each other so as to send fuel in the fuel cartridge to the power generation section.

### BACKGROUND ART

Recently, with the rapid widespread of portable and cordless electronic devices, as driving power sources for such electronic devices, secondary batteries having a small size, light weight and large energy density have been increasingly demanded. Furthermore, more attention has been paid to fuel cells that can be continuously used for a long time with fuel supplied than secondary batteries that need charging.

As small fuel cells to be mounted in small portable electronic devices, fuel cells using a liquid fuel such as methanol, a methanol aqueous solution, and a formic acid aqueous solution have received much attention. Such fuels are harmful to human bodies. Therefore, it is considered that such fuels are supplied in a state in which they are filled in a fuel cartridge and injected into an electronic device by directly connecting a connector of the fuel cartridge to a connector at the electronic device side in which a fuel cell is mounted. Furthermore, the shapes of these connectors are developed so that fuel does not leak out (for example, Patent Document 1).

Electronic devices, for example, portable phones are becoming smaller, and accordingly connectors are also becoming smaller. However, when the connectors are small, it is not easy for users having poor eyesight, for example, elderly persons to reliably connect these connectors. Furthermore, it is difficult for children and elderly persons to supply fuel to the electronic device side by pressing the fuel cartridge with their hand while connecting the electronic device and the fuel cartridge with each other. In addition, if an excessive force is applied in a state in which the fuel cartridge is connected to the electronic device, the fuel cartridge and the electronic device may be damaged in the vicinity of the connectors thereof.
Patent Document 1: Japanese Patent Unexamined Publication No. 2007-128850

### SUMMARY OF THE INVENTION

The present invention provides a fuel supply system for facilitating sending fuel in a fuel cartridge to a power generation section side. The fuel supply system of the present invention includes a holder, a first connector, a second connector to be connected to a fuel cartridge, and a connecting pipe. The holder includes a device holder part on which a device including at least a part of a power generation section having a fuel cell is to be mounted. The first connector to be connected to the device is provided on the device holder part. The connecting pipe connects the first connector with the second connector. A predetermined portion of the device holder part other than the first connector and a predetermined part of the device form a pair of mechanical keys having special shapes capable of being coupled to each other. In the fuel supply system having such a structure, a user can connect the first connector to the device only by fitting the device into the device holder part. In this state, when the second connector is connected to the fuel cartridge, fuel in the fuel cartridge can be sent to the power generation section side. Furthermore, a portion of the device holder part other than the first connector and the device form a pair of mechanical keys having special shapes capable of being coupled to each other. Therefore, it is possible to prevent a fuel cartridge of a type other than one suitable for the device from being connected to the device.

According to the present invention, it becomes easy to connect the device and the fuel cartridge with each other. Furthermore, it becomes easy for children and elderly persons to supply fuel to the electronic device side. Since the fuel cartridge is not directly coupled to the device and the device is held by the holder, the possibility that the fuel cartridge and the device are damaged in the respective connector parts or in the peripheries thereof is reduced. Furthermore, it is possible to prevent a fuel cartridge of a type other than one suitable for the device from being connected to the device.

### BRIEF DESCRIPTION OF THE DRAWINGS

Fig. 1 is a schematic sectional view showing a state in which an electronic device and a fuel cartridge are connected to a fuel supply system in accordance with a first exemplary embodiment of the present invention.
Fig. 2A is a schematic sectional view showing the state in which the electronic device and the fuel cartridge are connected to the fuel supply system shown in Fig. 1 seen from a different direction from that in Fig. 1.
Fig. 2B is a plan view showing a surface of a device holder part on which a first connector is provided in the fuel supply system shown in Fig. 2A.
Fig. 2C is a side view of the device holder part in the fuel supply system shown in Fig. 2A.
Fig. 3 is another plan view showing a surface of a device holder part on which the first connector is provided in the fuel supply system in accordance with the first exemplary embodiment of the present invention.
Fig. 4 is still another plan view showing a surface of a device holder part on which the first connector is provided in the fuel supply system in accordance with the first exemplary embodiment of the present invention.
Fig. 5A is a schematic sectional view showing a state in which an electronic device and a fuel cartridge are connected to a fuel supply system having another mechanical key in accordance with the first exemplary embodiment of the present invention.
Fig. 5B is a plan view showing a surface of a device holder part on which a first connector is provided in the fuel supply system shown in Fig. 5A.
Fig. 6A is a plan view showing a surface of a device holder part on which a first connector is provided in a fuel supply system having still another mechanical key in accordance with the first exemplary embodiment of the present invention.
Fig. 6B is a side view showing the device holder part of the fuel supply system shown in Fig. 6A.
Fig. 7 is a schematic sectional view showing a state in which an electronic device and a fuel cartridge are connected to a fuel supply system in accordance with a second exemplary embodiment of the present invention.
Fig. 8 is a schematic sectional view showing a state in which an electronic device and a fuel cartridge are connected to another fuel supply system in accordance with the second exemplary embodiment of the present invention.
Fig. 9 is a schematic sectional view showing a state in which an electronic device and a fuel cartridge are connected to a fuel supply system in accordance with a third exemplary embodiment of the present invention.

### REFERENCE MARKS IN THE DRAWINGS

- 1: electronic device
- 2: power generation section
- 3: fuel cartridge
- 4: holder
- 4A: first holder
- 4B: second holder
- 5, 5A: first connector
- 6, 6A: second connector
- 7: connecting pipe
- 16: reference plane
- 17: concave part
- 41: device holder part
- 42: cartridge holder part
- 43: protrusion (mechanical key)
- 43A, 43C: first part
- 43B, 43D: second part
- 44: third part
- 43E: mechanical key

### DETAILED DESCRIPTION OF THE PREFERRED EMBODIMENT

Hereinafter, exemplary embodiments of the present invention are described with reference to drawings. Note here that the present invention is not limited to the contents mentioned below as long as it is based on the basic features described in the description. Furthermore, in each exemplary embodiment, the same reference numerals are given to the same configurations as those in the preceding exemplary embodiments and detailed description thereof may be omitted.

### FIRST EXEMPLARY EMBODIMENT

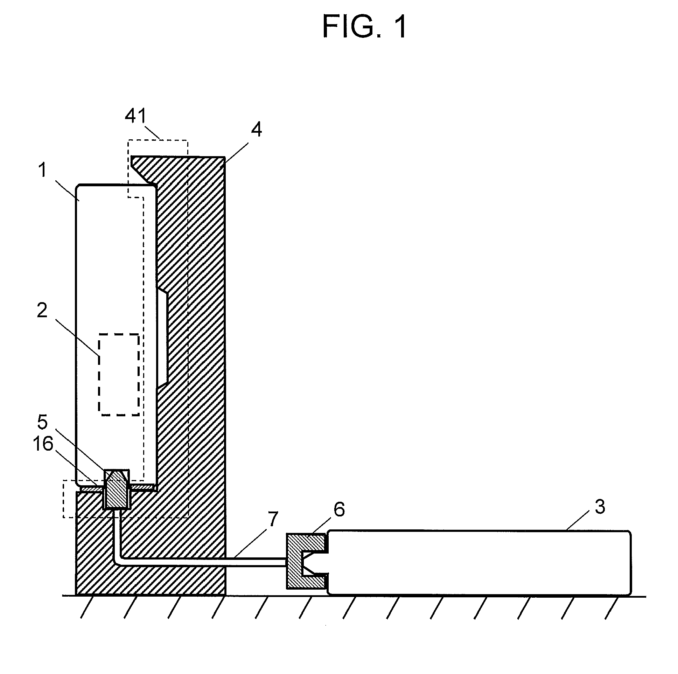

Fig. 1 is a schematic sectional view showing a state in which electronic device 1 and fuel cartridge 3 are connected to a fuel supply system in accordance with a first exemplary embodiment of the present invention. Electronic device 1 includes power generation section 2 having a fuel cell. Note here that the detailed structures of the inside of electronic device 1 and fuel cartridge 3 are omitted. The fuel supply system is configured to connect electronic device 1 and fuel cartridge 3 with each other so as to send fuel in fuel cartridge 3 to the power generation section 2 side. The fuel supply system includes holder 4, first connector 5, second connector 6, and connecting pipe 7.

Holder 4 has device holder part 41 on which electronic device 1 is to be mounted. First connector 5 to be connected to electronic device 1 is provided at device holder part 41. Second connector 6 is connected to fuel cartridge 3. Connecting pipe 7 connects first connector 5 with second connector 6.

Although not shown, power generation section 2 has a fuel cell and a tank for storing fuel of the fuel cell. In Fig. 1, power generation section 2 is incorporated in electronic device 1. However, power generation section 2 may be provided as a separated body from electronic device 1, and may be detachable with respect to the main body of electronic device 1. Furthermore, only one of the tank and the fuel cell mentioned above may be provided as a separated body from electronic device 1. Therefore, electronic device 1 may include at least a part of the power generation section having a fuel cell.

Herein, the fuel is intended to mean a liquid fuel such as methanol or an aqueous solution thereof, and formic acid. Furthermore, fuel cartridge 3 may employ a method of sending fuel by pressurizing from outside, or a method of sending fuel by an internal pressure that has been set to be high.

First connector 5, second connector 6, holder 4, and connecting pipe 7 are made of resin and/or metal. They are made of a methanol-resistant resin material such as polyethylene, polypropylene, polyethyletherketone, polyphenylene sulfide, polyethylene terephthalate, polybutylene terephthalate, polyacetal, super engineering plastic such as liquid crystal polymer, and the like. In particular, first connector 5, second connector 6, and connecting pipe 7 are made of materials that do not easily react with nor easily dissolve in fuel, or materials that are not easily eluted from fuel, or materials that are not eluted from fuel. In other words, it is preferable to use materials in which residues, metal cation and the like are not eluted from a base material when the materials are brought into contact with fuel.

It is preferable that device holder part 41 has a shape of holding electronic device 1 at a position other than a position on which first connector 5 is provided so that electronic device 1 can be held. First connector 5, second connector 6, a connector part of electronic device 1 and a connector part of fuel cartridge 3 are provided with a valve mechanism for preventing fuel from leaking to the outside, but the detail thereof is omitted herein.

Reference plane 16 is formed at the periphery of the connector part of electronic device 1. By securing the accuracy of reference plane 16 and the opening/closing position of the valve mechanism, regardless of the total length of electronic device 1, the sequence of the valve mechanism is reliably executed even if the insertion length is extremely small. Consequently, connectors are connected without leakage of fuel to the outside.

In a fuel supply system having such a structure, a user can connect first connector 5 to electronic device 1 only by fitting electronic device 1 into device holder part 41. When second connector 6 is connected to fuel cartridge 3 in this state, fuel in fuel cartridge 3 can be sent to the power generation section 2 side. Therefore, electronic device 1 and fuel cartridge 3 can be connected to each other easily. Furthermore, since fuel cartridge 3 is not directly coupled to electronic device 1 and electronic device 1 is held by holder 4, the possibility that fuel cartridge 3 and electronic device 1 are damaged in each connector part or at the periphery thereof is reduced.

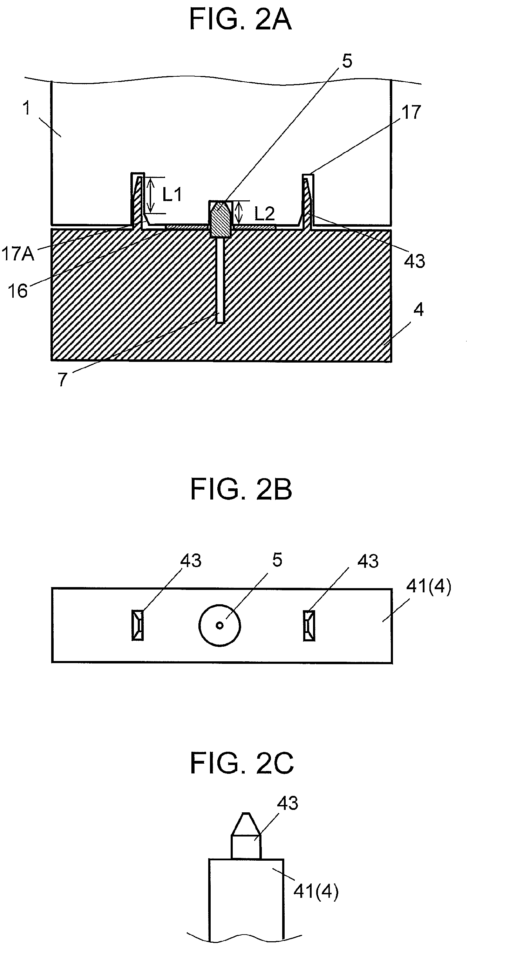

Fig. 2A is a schematic sectional view showing a state in which electronic device 1 and fuel cartridge 3 are connected to the fuel supply system in this exemplary embodiment seen from a different direction from that in Fig. 1. Fig. 2B is a plan view showing a surface of device holder part 41 on which first connector 5 is provided. Fig. 2C is a side view of device holder part 41. Protrusion 43 that is a predetermined portion other than first connector 5 on device holder part 41 and concave part 17 that is a predetermined part provided on electronic device 1 form a pair of mechanical keys having special shapes capable of being coupled to each other. In this way, when mechanical keys are formed on the predetermined portion other than first connector 5 in device holder part 41 and on the predetermined part in electronic device 1, it is possible to prevent a fuel cartridge of a type other than a type suitable for electronic device 1 from being connected to electronic device 1. Hereinafter, protrusion 43 is referred to as mechanical key 43 in the device holder side.

In Figs. 2A to 2C, mechanical keys 43 are provided at the periphery of first connector 5. When electronic device 1 cannot be inserted into first connector 5 from an appropriate direction, an excessive force may be applied to first connector 5. The strength of first connector 5 and the connector part of electronic device 1 is not so large. Therefore, thanks to mechanical keys 43 formed at the periphery of first connector 5 on device holder part 41, it is possible to reliably prevent first connector 5 from being damaged.

Furthermore, it is preferable that the strength of mechanical key 43 is larger than that of first connector 5. Thus, first connector 5 can be reliably protected. Such a configuration can be achieved by the combination of, for example, first connector 5 made of resin and mechanical key 43 made of metal.

In Figs. 2A to 2C, the tip of mechanical key 43 is tapered. Moreover, mechanical key 43 is provided in two places. Therefore, mechanical key 43 functions as a guide for guiding the connector part of electronic device 1 to first connector 5. Such a structure further facilitates placing electronic device 1 on device holder part 41. In particular, a side surface of mechanical key 43 facing first connector 5 is formed of one plane. Therefore, the wall surface along concave part 17 of electronic device 1 can be inserted along this surface.

Note here that as shown in Fig. 2A, introducing part 17A is provided at the lower end of concave part 17. When electronic device 1 is placed on device holder part 41, it is preferable that length L1 from the upper end of introducing part 17A to the tip of mechanical key 43 is substantially the same as or larger than depth L2 of the connector part of electronic device 1 from reference plane 16. Thus, the insertion of mechanical key 43 is started. Then, after mechanical key 43 passes through introducing part 17A, electronic device 1 does not move with respect to mechanical holder 41. Therefore, first connector 5 can be reliably inserted into the connector part of electronic device 1.

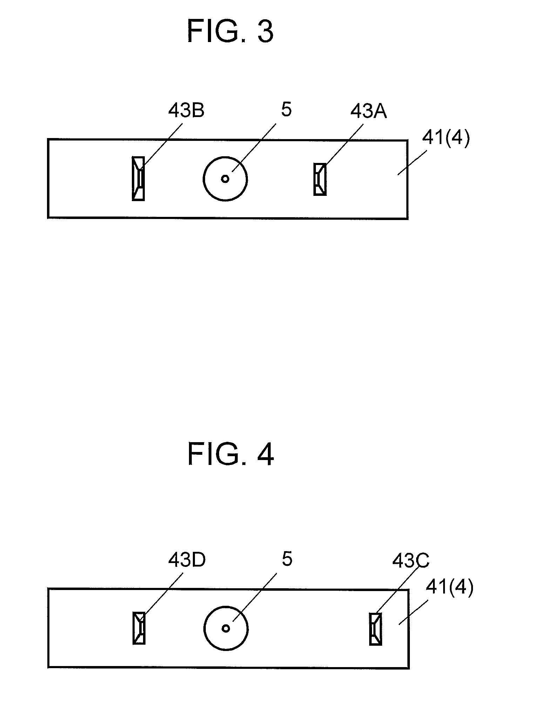

Note here that mechanical key 43 may be configured as shown in Figs. 3, 4, 5A, 5B, 6A and 6B in addition to the configuration shown in Figs. 2A to 2C. Figs. 3 and 4 are other plan views showing a surface of device holder part 41 on which first connector 5 is provided in the fuel supply system in accordance with this exemplary embodiment. In Fig. 3, the sizes of first part 43A of the mechanical key and second part 43B of the mechanical key are different from each other. In Fig. 4, the distance from first part 43C of the mechanical key to first connector 5 is different from the distance from second part 43D to first connector 5. In any configurations, it is possible to prevent electronic device 1 from being inserted oppositely.

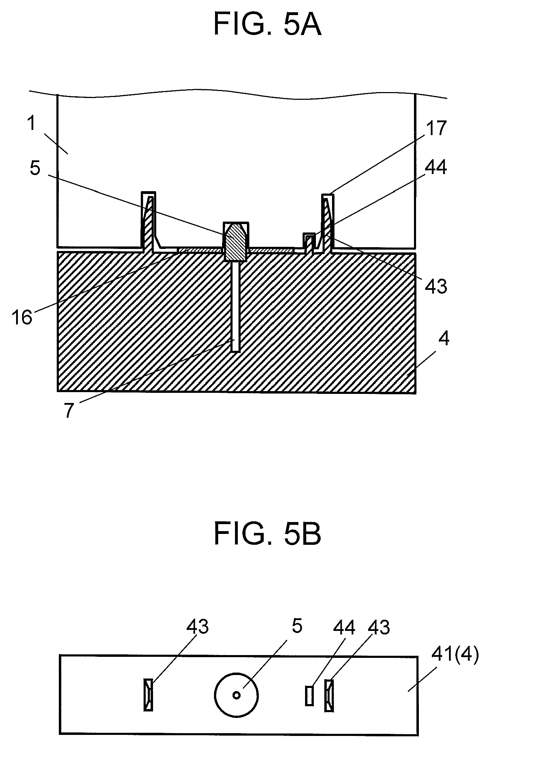

Fig. 5A is a schematic sectional view showing a state in which electronic device 1 and fuel cartridge 3 are connected to a fuel supply system on which another mechanical key is formed in accordance with this exemplary embodiment. Fig. 5B is a plan view showing a surface of device holder part 41 on which first connector 5 is provided in the fuel supply system shown in Fig. 5A. In this configuration, mechanical keys 43 as the first part and second part and a mechanical key as third part 44 are formed. In this way, also when third part 44 is provided in addition to mechanical keys 43 functioning as a guide, it is possible to prevent electronic device 1 from being inserted oppositely.

Note here that in Figs. 2A to 5B, mechanical keys that are long in the thickness direction of electronic device 1 are formed. However, mechanical keys are not necessarily limited to those examples. A mechanical key that is long in the direction perpendicular to the thickness direction of electronic device 1 may be formed. Furthermore, a plurality of third parts 44 may be provided, and third part 44 may be integrated with mechanical key 43.

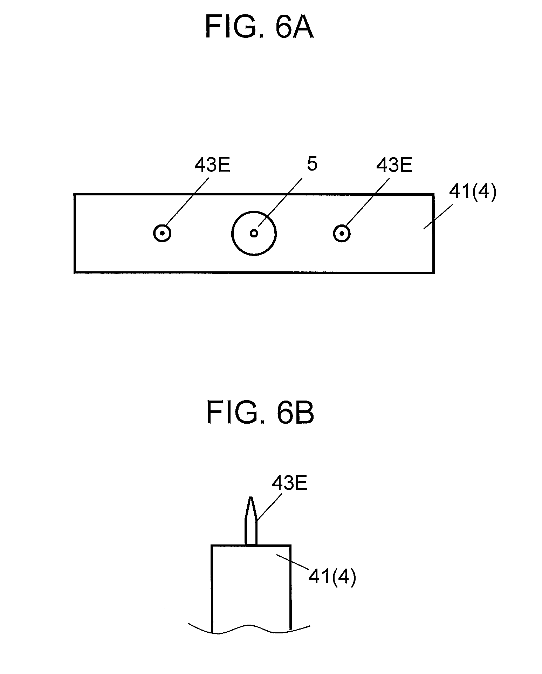

Fig. 6A is a plan view showing a surface of device holder part 41 having still another mechanical key on which first connector 5 is provided in accordance with this exemplary embodiment. Fig. 6B is a side view showing device holder part 41 of the fuel supply system in Fig. 6A. In this configuration, each mechanical key 43E is formed in a pin shape having a sharpened tip. The same effect as that of the configurations shown in Figs. 2A to 2C can be obtained also when such mechanical keys 43E are formed.

In Fig. 1, second connector 6 is disposed apart from holder 4. However, second connector 6 may be provided on the side surface of holder 4 opposite side to device holder part 41. When second connector 6 is disposed in this location, fuel cartridge 3 can be coupled to second connector 6 by sliding fuel cartridge 3 on the floor so as to allow holder 4 to face fuel cartridge 3.

In Fig. 1, first connector 5 is made to have a convex shape and second connector 6 is made to have a concave shape, and may be vice versa, as long as they can be coupled to electronic device 1 and fuel cartridge 3, respectively.

### SECOND EXEMPLARY EMBODIMENT

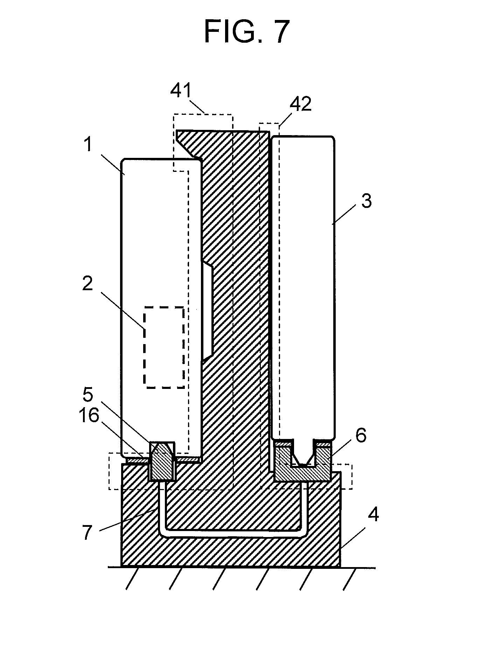

Fig. 7 is a schematic sectional view showing a state in which electronic device 1 and fuel cartridge 3 are connected to a fuel supply system in accordance with a second exemplary embodiment of the present invention. This exemplary embodiment is different from the first exemplary embodiment in that holder 4 further includes cartridge holder part 42 capable of holding fuel cartridge 3 and second connector 6 is provided at cartridge holder part 42. The other configurations are the same as those in the first exemplary embodiment.

In this way, when holder 4 has a configuration capable of also holding fuel cartridge 3, electronic device 1 and fuel cartridge 3 can be easily connected with each other only by setting both electronic device 1 and fuel cartridge 3 on holder 4.

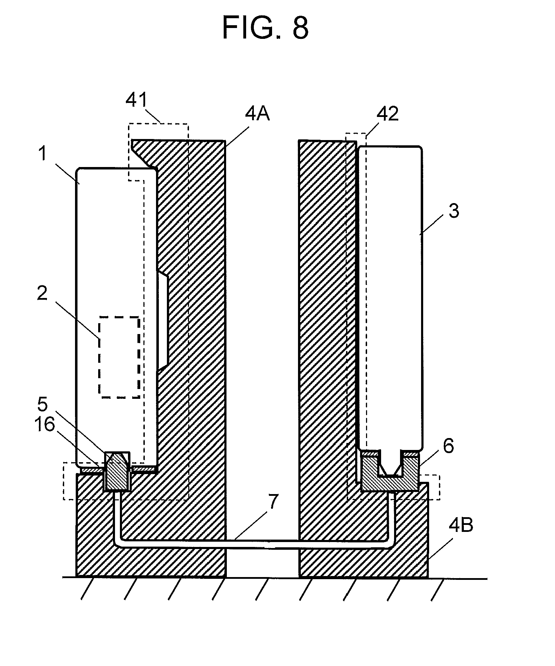

Fig. 8 is a schematic sectional view showing a state in which electronic device 1 and fuel cartridge 3 are connected to another fuel supply system in accordance with the second exemplary embodiment of the present invention. The fuel supply system shown in Fig. 8 is different from the fuel supply system shown in Fig. 7 in that holder 4 is divided into first holder 4A and second holder 4B and that device holder part 41 is provided on first holder 4A and cartridge holder part 42 is provided on second holder 4B. Also when thus divided first holder 4A and second holder 4B are used and electronic device 1 and fuel cartridge 3 are mounted on first holder 4A and second holder 4B, respectively, the same effect as in Fig. 7 can be obtained.

### THIRD EXEMPLARY EMBODIMENT

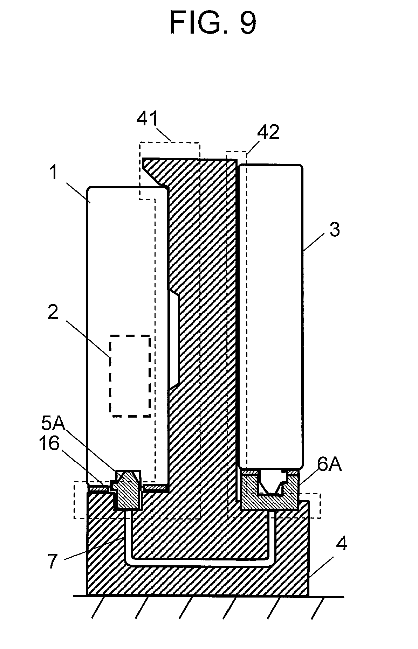

Fig. 9 is a schematic sectional view showing a state in which electronic device 1 and fuel cartridge 3 are connected to a fuel supply system in accordance with a third exemplary embodiment of the present invention. This exemplary embodiment is different from the second exemplary embodiment in that first connector 5A and second connector 6A form a pair of mechanical keys having special shapes capable of being coupled to each other.

It is preferable that a connector part of electronic device 1 and a connector part of fuel cartridge 3 form a pair of mechanical keys having special shapes capable of being coupled to each other. In general, this can prevent a fuel cartridge, which is a different type and is not suitable for electronic device 1, from being connected to electronic device 1. Thus, it is preferable that first connector 5A and second connector 6A form a pair of mechanical keys.

Herein, the type of fuel cartridge 3 includes kinds and concentration of fuel, the presence of an internal pressure for sending fuel, and the like. When fuel that is not suitable for power generation section 2 of electronic device 1 is used, the possibility that the performance of a fuel cell of power generation section 2 may be degraded is high. The configuration of this exemplary embodiment can prevent such problems.

However, the strength of these connector parts is not so large. Therefore, it is preferable that the periphery part of first connector 5A of device holder part 41 and electronic device 1 form a pair of mechanical keys having special shapes capable of being coupled to each other. Thus, since mechanical keys are formed in the connector parts of first connector 5A and electronic device 1, even when a wrong type of electronic device 1 is connected, damage of first connector 5A can be prevented.

### INDUSTRIAL APPLICABILITY

A fuel supply system in accordance with the preset invention facilitates coupling (connecting) a fuel cartridge and an electronic device with each other. Therefore, fuel can be easily supplied to the electronic device. Moreover, it is possible to prevent a fuel cartridge of a type other than one suitable for the electronic device from being connected to the device. The fuel supply system is useful because the convenience is improved in a system for supplying fuel to a small electronic device via a small connector.

## Claims

1. A fuel supply system for connecting a device including at least a part of a power generation section having a fuel cell and a fuel cartridge with each other so as to send fuel in the fuel cartridge to the power generation section, the fuel supply system comprising:
a holder having a device holder part on which the device is to be mounted;
a first connector provided at the device holder part and to be connected to the device;
a second connector to be connected to the fuel cartridge; and
a connecting pipe connecting the first connector with the second connector,
wherein a predetermined portion of the device holder part other than the first connector and a predetermined part of the device form a pair of mechanical keys having special shapes capable of being coupled to each other.

2. The fuel supply system according to claim 1,
wherein the mechanical key at the device holder part side is provided at a periphery of the first connector.

3. The fuel supply system according to claim 2,
wherein a strength of the mechanical key at the device holder part side is larger than a strength of the first connector.

4. The fuel supply system according to claim 2,
wherein the mechanical key at the device holder part side functions as a guide for guiding a connector part of the device to the first connector.

5. The fuel supply system according to claim 2,
wherein the mechanical key at the device holder part side includes a first part and a second part having a different size from that of the first part.

6. The fuel supply system according to claim 2,
wherein the mechanical key at the device holder part side includes a first part and a second part, and a distance from the first part to the first connector is different from a distance from the second part to the first connector.

7. The fuel supply system according to claim 2,
wherein the mechanical key at the device holder part side includes a first part, a second part and a third part.

8. The fuel supply system according to claim 1,
wherein the holder further includes a cartridge holder part capable of holding the fuel cartridge, and
the second connector is provided at the cartridge holder part.

9. The fuel supply system according to claim 1,
wherein the holder includes a first holder having the device holder part and a second holder having a cartridge holder part capable of holding the fuel cartridge, and
the second connector is provided at the cartridge holder part.
